**Europäisches Patentamt**

**European Patent Office**

**Office européen des brevets**

(19)

(11) Veröffentlichungsnummer: **0 139 954**
**B1**

# EUROPÄISCHE PATENTSCHRIFT

(12)

(45) Veröffentlichungstag der Patentschrift:
04.02.87

(21) Anmeldenummer: 84109728.0

(22) Anmeldetag: 12.05.82

(51) Int. Cl.⁴: **F 16 B 7/04**

(54) Gestell aus lösbar verbindbaren Profilstangen.

(30) Priorität: 20.07.81 DE 3128595

(43) Veröffentlichungstag der Anmeldung:
08.05.85 Patentblatt 85/19

(45) Bekanntmachung des Hinweises auf die Patenterteilung:
04.02.87 Patentblatt 87/6

(84) Benannte Vertragsstaaten:
AT BE CH FR IT LI NL SE

(56) Entgegenhaltungen:
EP-A-0 000 525
DE-A-2 817 518
DE-U-7 341 203
FR-A-2 152 941

(73) Patentinhaber: Gebrüder Vieler GmbH, Gennaer
Strasse 66, D-5860 Iserlohn- Letmathe (DE)

(72) Erfinder: Hackenberg, Dieter, Kohlensiepen 130 d,
D-5810 Witten 6 (DE)

(74) Vertreter: Mentzel, Norbert, Dipl.- Phys.,
Patentanwälte Dipl.- Phys. Buse Dipl.- Phys.
Mentzel Dipl.- Ing. Ludewig Unterdörnen 114,
D-5600 Wuppertal 2 (DE)

## Beschreibung

Die Erfindung richtet sich auf ein Gestell der im Oberbegriff des Anspruches 1 angegebenen Art, wo Profilstangen lösbar miteinander zu einem Gestell gekuppelt werden. Dies geschieht durch einen Verbinder, der aus einem Lagergehäuse sowie einem darin längsverschieblichen Halteglied besteht. Am freien Ende des Halteglieds befindet sich ein Kupplungshaken. Der Verbinder wird mit einem Lagergehäuse in den Hohlraum einer ersten Profilstange eingebaut, so daß stirnseitig die Kupplungshaken herausragen. Der Kupplungshaken wird in eine hinterschnittene Längsnut einer anderen Profilstange des Gestells eingeführt und dort festgeklemmt.

Bei einem solchen Gestell ist es bekannt (DE-U-73 413 203), das Halteglied mit einem im Lagergehäuse drehgelagerten Exzenterbolzen zu durchsetzen, der aus einem als Handhabe dienenden Drehkopf und einer Exzenterscheibe besteht. Beim Drehen des Exzenterbolzens wird das Halteglied von der Exzenterscheibe zunächst in Längsrichtung der Profilstange zwischen einer Ausschublage und einer Einschublage bewegt. Am Lagergehäuse ist aber noch eine Keilfläche vorgesehen, gegen welche sich das Halteglied mit einer Gegenschräge abstützt. Beim Drehen des Exzenterbolzens vollführt deshalb der Kupplungshaken auch eine quer zur Profilstange gerichtete Bewegung, hintergreift dabei die Längsnut der anderen Profilstange und zieht diese bei der weiteren Längsbewegung des Halteglieds an das Stirnende der den Verbinder aufnehmenden ersten Profilstange heran. Es findet sowohl eine Längsbewegung als auch eine quergerichtete Schwenkbewegung des Kupplungshakens statt. Zum Kuppeln bzw. Entkuppeln der Profilstange ist zwar nur eine halbe Drehung des Exzenterbolzens nötig, doch ist es umständlich, den Verbinder mit seinen Bestandteilen innerhalb der Profilstange zu montieren.

Es ist grundsätzlich bekannt (DE-A 28 17 518),Verbinder als Baueinheit außerhalb der Profilstange vorzumontieren und zur einfachen Montage des fertigen Verbinders dessen Exzenterbolzen zu nutzen, der axialverschieblich im Lagergehäuse geführt ist und aufgrund einer Federbelastung bestrebt ist, seinen Drehkopf herausgedrückt zu halten. Zur Montage des Verbinders ist es lediglich nötig, den Drehkopf, wie einen Druckknopf, in das Lagergehäuse einzudrücken und den Verbinder in den Hohlraum der Profilstange vom Stirnende aus einzuschieben. Ist der Verbinder in seine bestimmungsgemäße Position im Innern der Profilstange gelangt, so schnappt der federbelastete Drehkopf in eine Querbohrung der Profilstange ein, wodurch die Montagelage des Verbinders festgelegt ist. Die Demontage erfolgt, im umgekehrten Sinne, durch Eindrücken des Drehkopfs in der Querbohrung. Beim Drehen des Exzenterbolzens führt bei diesem bekannten Verbinder der Kupplungshaken nur eine quergerichtete Schwenkbewegung aus.

Es ist bereits vorgeschlagen worden, die vorgenannte Druckknopfwirkung des Exzenterbolzens zur Montage und Demontage des Verbinders an einer ihn aufnehmenden Profilstange auch bei Verbindern der vorgenannten gattungsgemäßen Art anzuwenden, wo der Kupplungshaken beim Drehen des Exzenterbolzens außer der quergerichteten Schwenkbewegung auch noch eine in Verlaufsrichtung der Profilstange gerichtete Längsbewegung ausführt (EP-A-0 059 463 veröffentlicht 8. 9. 82, Stand der Technik gemäß Art. 54, Abs.3, EPÜ). Die Axialfederung des Exzenterbolzens erfolgt durch eine unmittelbar an der Exzenterscheibe und im Lagergehäuse sich abstützende Feder, das Bolzenende durchgreift ein Loch in der Bodenwand des Lagergehäuses und ein darauf sitzender Sprengring schlägt auf der Rückseite der Bodenwand an und bestimmt die herausgedrückte Lage des Drehkopfs aus den Umrissen des Lagergehäuses. Zur Sicherung der Montagelage des Drehkopfs ist eine bewegliche Druckplatte über einen Schlitten längsverschieblich an der Bodenwand des Lagergehäuses geführt und über einen die Bodenwand durchgreifenden Zapfen mitbeweglich mit dem Halteglied gekoppelt. In Einschublage des Halteglieds wird die Druckplatte soweit verschoben, daß sie das Schaftende des Exzenterbolzens untergreift und daher den Drehkopf im herausgedrückten Zustand arretiert. Nachteilig sind die eine kostspielige Einzelherstellung erforderlichen zahlreichen Bauteile und ihre zeitaufwendige Montage. Die längsverschiebliche Druckplatte ist ein dem Verschleiß unterworfener Bauteil, dessen Schlittenführung an der Bodenwand und Zapfenverbindung am Halteglied einen umständlichen Einbau verursachen.

Der Erfindung liegt die Aufgabe zugrunde, ein schnell und sicher zusammenbaubares Gestell der im Oberbegriff des Anspruches 1 genannten Art zu entwickeln, dessen Verbinder aus möglichst wenigen, einfachen und leicht zusammenbaubaren Bestandteilen besteht. Dies wird erfindungsgemäß durch die im Kennzeichen des Anspruches 1 angeführten Maßnahmen erreicht, denen folgende Bedeutung zukommt.

Die Sicherung des Exzenterbolzens in der Montagestellung erfolgt einfach durch einen ortsfesten Anschlag, der als Auflaufbock für das Endstück des Halteglieds dient und bei einer Zinkdruckguß-Herstellung des Lagergehäuses gleich mit angeformt werden kann. Das im Gehäuseinneren befindliche Endstück des Halteglieds dient zur Anlage des Exzenterbolzens, wenn man ihn im Eindrücksinne bewegt. Die axiale Federung des Exzenterbolzens kann mittelbar durch eine Federbelastung des Halteglieds erzeugt werden. Das federnde Endstück des Halteglieds liegt frei und läßt sich durch Eindrücken des Drehkopfs des Exzenterbolzens gegen die Federkraft des Halteglieds in den Freiraum einschwenken, wobei die Anlagestelle zwischen der Gegenschräge des Halteglieds und der Keilfläche des Lagergehäuses als Schwenkpunkt dient. Bezüglich der Längsverschiebung des Halteglieds ist der Anschlag so positioniert, daß er in Ausschublage sich zwar außerhalb des Endstücks befindet, aber in Einschublage in den Betätigungsweg des Endstücks hineinragt. Dadurch kommt dem Halteglied die weitere besondere Funktion zu, zusammen mit dem Anschlag die Arretierung des Exzenterbolzens im Kupplungsfall zu bewirken. In Ausschublage des Halteglieds liegt stets der Entkupplungsfall des Halteglieds vor, wo keine Verbindung zwischen Profilstangen bewirkt wird. Aufgrund der Querverschwenkbarkeit des Endstücks läßt sich der Exzenterbolzen mit seinem Drehkopf eindrücken und daher die gewünschte Montage und Demontage des Verbinders im Hohlraum seiner Profilstange bewirken. In Einschublage des Halteglieds kann sich aber der Kupplungshaken in einer Kupplungsstellung zum Zusammenhalten von Profilstangen befinden. Der Anschlag bildet jetzt ein Hindernis für die Schwenkbewegung des Endstücks vom Halteglied. Das Halteglied ist dadurch starr gemacht und läßt ein axiales Eindrücken des Drehkopfs vom Exzenterbolzen nicht mehr zu. Der Exzenterbolzen ist in seiner axialen Bewegung blockiert. Die beiden Profilstangen sind in ihrer durch den Verbinder bewirkten Kupplungslage zuverlässig gesichert.

Weitere Maßnahmen und Vorteile der Erfindung sind aus der Beschreibung und den Zeichnungen ersichtlich, wo die Erfindung in einem Ausführungsbeispiel dargestellt ist. Es zeigen:.

Fig. 1 die geschnittene Seitenansicht längs der in Fig. 3 angedeuteten Schnittlinie I-I von zwei Profilstangen des erfindungsgemäßen Gestells, die zwar mit einem Verbinder versehen, aber noch nicht miteinander gekuppelt sind,

Fig. 2 eine der Fig. 1 entsprechende Schnittansicht längs der Schnittlinie II-II von Fig. 4, wo der Verbinder die Kupplung der beiden Profilstangen vollzogen hat,

Fig. 3 eine längsgeschnittene Draufsicht von Fig. 1 längs der dortigen Schnittlinie III-III,

Fig. 4 eine der geschnittenen Draufsicht von Fig. 3 entsprechende Darstellung der gekuppelten Profilstangen längs der Schnittlinie IV-IV von Fig. 2,

Fig. 5 eine der Fig. 3 entsprechende längsgeschnittene Draufsicht, wo allerdings Bauteile des Verbinders sich in einer Demontagestellung befinden, die einen Ein- und Ausbau des Verbinders gestattet,

Fig. 6 und 7 die Draufsicht und Seitenansicht eines zum Verhinder gehörenden Halteglieds,

Fig. 8 und 9 die Seitenansicht und Draufsicht eines zum Verbinder gehörenden Lagergehäuses und

Fig. 10 und 11 die ausgebrochene Seitenansicht und Endansicht eines beim Verbinder verwendeten Exzenterbolzens.

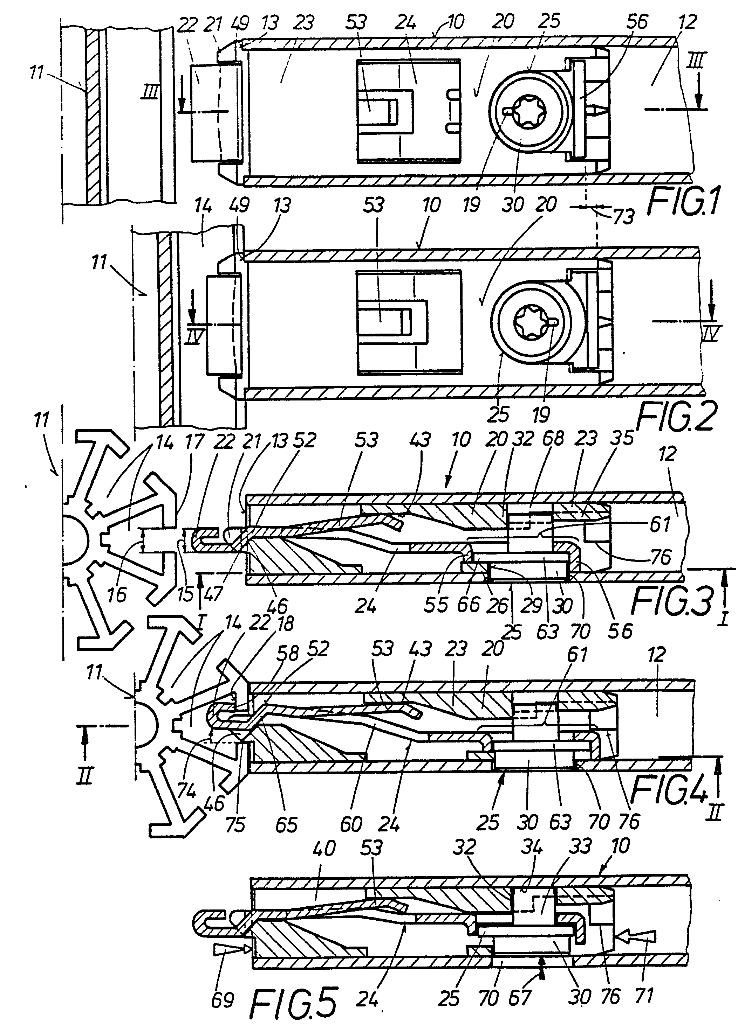

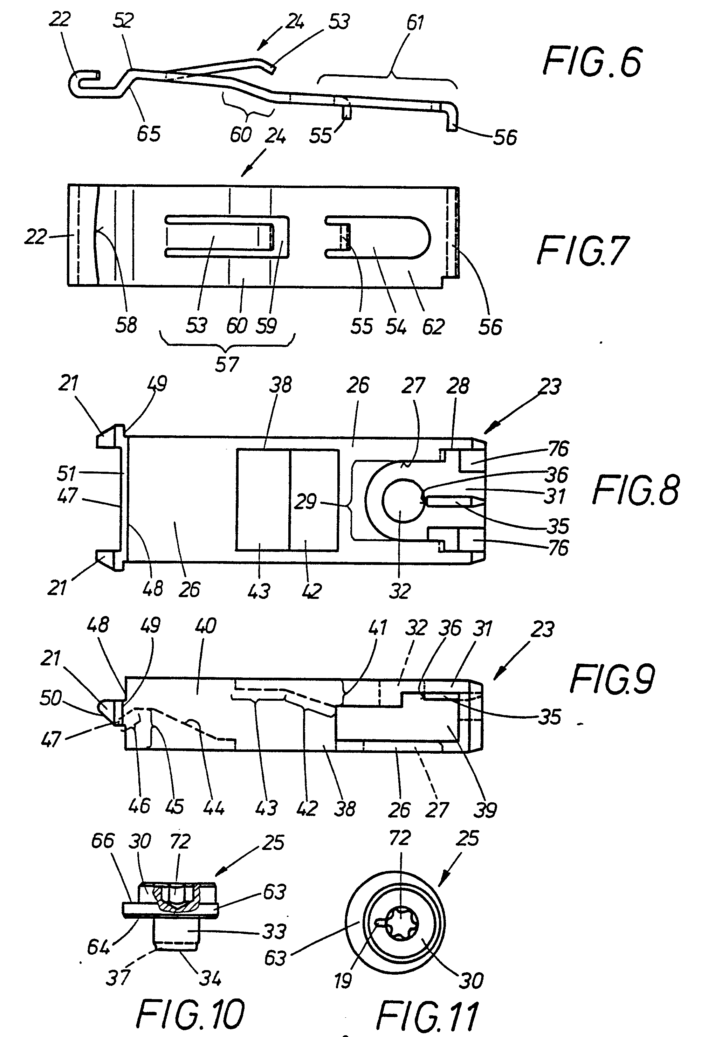

Zum Kuppeln von Profilstangen 10, 11 des erfindungsgemäßen Gestells dienen Verbinder 20, die im Hohlraum 12 der einen Profilstange 10 untergebracht sind, aus deren Stirnfläche 13 Kupplungsmittel 21, 22 herausragen. Diese kommen im Kupplungsfall, der in Fig. 2 und 4 gezeigt ist, in Eingriff mit hinterschnittenen Längsnuten 14 der anderen Profilstange 11, die hier aus einer vertikalen achteckigen Säule besteht, die längs ihrer Umfangsfläche mit acht solchen Längsnuten 14 ausgerüstet ist.

Der Verbinder 20 besteht aus einer vorgefertigten Baueinheit, die im vorliegenden Ausführungsbeispiel nur drei Bestandteile benützt, nämlich ein Lagergehäuse 23, einen als Halteglied 24 fungierenden Blechstreifen und einen Exzenterbolzen 25. Diese Bestandteile haben folgendes Aussehen:

Das Lagergehäuse 23 hat Rechteckform mit einem dem Hohlprofil 12 der Profilstange 10 angepaßten Querschnitt. Das Lagergehäuse hat die Form eines Rechteckrohres, das, bis auf die nachfolgend genannten Einbauten, zum vorderen und hinteren Stirnende hin offen ist und damit eigentlich nur Seitenwände aufweist. Die in Fig. 8 vorn liegende Seitenwand 26 ist am inneren Ende des Lagergehäuses 23 mit einem Wandausschnitt 27 mit nach innen zu abgeschrägten Absätzen 28 versehen, die als Montageöffnung für den mit dem Exzenterbolzen 25 ausgerüsteten Blechstreifen 24 dienen. Der Wandausschnitt 27 geht in eine kreisförmige Lagerstelle 29 für einen entsprechend dimensionierten Drehkopf 30 des Exzenterbolzens 25 über. Die im Wandausschnitt 27 von Fig. 8 sichtbare hintere Seitenwand 31 ist, koaxial zum Kreisbogen der vorderen Lagerstelle 29, mit einer Lageröffnung 32 für einen Lagerzapfen 33 am Exzenterbolzen 25 versehen, der allerdings normalerweise, wie aus Fig. 3 und 4 hervorgeht, im Montagezustand mit seinem Stirnende 34 nur halbseitig in die Lageröffnung 32 hineinragt, weil diese, ausweislich der Draufsicht auf das Lagergehäuse 23 von Fig. 9, abgesetzt ist und normalerweise nur im linken Öffnungsbereich von Fig. 9 den Lagerzapfen 33 abstützt. Auf der gegenüberliegenden Seite sitzt vor der Lageröffnung 32 eine zugeschärfte längsverlaufende Leiste 35 an der hinteren Seitenwand 31, die mit ihrem Innenende 36 am Umfang des Lagerzapfens 33 zu liegen kommt. Zu Einführzwecken des am Blechstreifen 24 eingefügten Exzenterbolzens 25 besitzt sein Lagerzapfen 33 eine am besten aus Fig. 10 ersichtliche diametrale Montagenut 37, die beim Montagevorgang eine ausgerichtete Drehlage des Exzenterbolzens 25 festlegt, wenn dieser über die erwähnte Zuschärfung längs der Leiste 35 in dem Wandausschnitt 27 eingeführt wird.

Das Lagergehäuse 23 ist aus Zinkdruckguß hergestellt und besitzt für die Zugänglichkeit von Teilen der Gießform ein vorderes Fenster 38, gemäß Fig. 8, ein oberes Fenster 39, gemäß Fig. 9, und ein hinteres, am besten aus Fig. 5 ersichtliches Fenster 40, die in verschiedenen Längenabschnitten des Lagergehäuses 23 untergebracht sind. Diese Fenster dienen natürlich auch zur Beobachtung des Montagevorgangs und der Endlage des mit dem Exzenterbolzen 25 ausgerüsteten Blechstreifens 24. Diese Fenster ermöglichen die besondere, aus Fig. 9 gestrichelt angedeutete Profilierung der beiden Innenflächen der vorderen und hinteren Seitenwand 26, 31. Die hintere Seitenwand 31 ist schon im Bereich des erwähnten inneren Teils der Lageröffnung 32 mit einer Verdickung 41 versehen, vor welcher eine für Demontagezwecke bedeutsame Neigungsfläche 42 liegt, die schließlich in eine ebene Innenwand 43 übergeht. Jenseits des vorderen Fensters 38 besitzt die gegenüberliegende Innenfläche der vorderen Seitenwand 26, ausgehend vom Fenster 38, eine ansteigende Rampe 44, die im vorderen Bereich des Lagergehäuses eine Wandverdickung 45 erzeugt, wo die Wandstärke zunächst ein kurzes Stück gleichmäßig weiterläuft, um schließlich in einer steilen Keilfläche 46 nach vorne zu abzufallen. Die Spitze 47 der Keilfläche liegt etwas vor dem vorderen Stirnende 48 des Lagergehäuses, wie aus Fig. 9 und 8 hervorgeht. Dieses Stirnende 48 wird von einem Paar ortsfester Kupplungsnasen 21 überragt, welche einen Teil der oben erwähnten Kupplungsmittel des Verbinders 20 bilden. Die Kupplungsnasen 21 sind in Fortsetzung der oberen und unteren Seitenwand des Lagergehäuses ausgeformt, haben etwa Pfeilform und überragen die obere und untere Seitenfläche mit einem am besten aus Fig. 8 ersichtlichen Absatz 49, der sich im Montagefall, wie aus Fig. 2 hervorgeht, vor die Stirnfläche 13 im Rohrprofil der Profilstange 10 setzt. Durch diese Anschlagwirkung ist die Einstecktiefe des Verbinders 20 im Hohlraum 12 der Profilstange 10 festgelegt. In Draufsicht der Fig. 9 gesehen, besitzen die Nasen 21 eine Auflaufschräge 50, welche die Einführung der Kupplungsmittel in die Längsnut 14 der anderen Profilstange 11 erleichtern soll. Wegen der vorgezogenen Keilfläche 46 vor dem Gehäuseende 48 sind die beiden Kupplungsnasen 21 von einem durchgehenden Keilsteg 51 gemäß Fig. 8 miteinander verbunden.

Der Stahlblechstreifen 24 hat die besondere aus Fig. 6 und 7 ersichtliche Form. An seinem vorderen Ende besitzt er einen zurückgebogenen Haken 22 mit einer geschweiften Endkante 58, wodurch ein bewegliches Kupplungsmittel im Verbinder 20 erzeugt wird. Im anschließenden Mittelstück 57 des Stahlblechstreifens 24 ist durch einen U-förmigen Schnitt 59 eine Federzunge 53 ausgeschnitten und aus dem Streifen abgebogen. Im Mittelstück 57 befindet sich auch noch eine Z-artige Ausbiegung 60 im Blechstreifen 24. Der Blechstreifen 24 läuft innen in einem Endstück 61 aus, in dem zunächst ein Langloch 54 ausgeschnitten ist, dessen der Mitte zugekehrter Rand abgekantet ist und eine vorspringende Leiste 55 auf einer Flächenseite 62 bildet. Das Ende des Blechstreifens 24 ist im gleichen Sinne abgekantet und bildet eine endseitige Leiste 56. Diese mit Leisten 55, 56 versehene Flächenseite 62 liegt der abgewinkelten Zunge 53 gegenüber.

Zur Montage wird zunächst der Exzenterbolzen 25 mit seinem Lagerzapfen 33 durch das Langloch 54 gesteckt, bis eine Exzenterscheibe 63 des Bolzens 25 mit ihrer, aus Fig. 10 ersichtlichen inneren Stirnfläche 64, anschlagartig an der vorerwähnten Flächenseite 62 des Stahlblechstreifens 24 zur Anlage kommt. Dabei kommen diametral gegenüberliegende Umfangsstellen der Exzenterscheibe 63 zwischen die beiden Leisten 55, 56 zu liegen. Der Stahlblechstreifen 24 wird mit dem darin steckenden Exzenterbolzen 25 durch den bereits erwähnten Wandausschnitt 27 des Lagergehäuses 23 eingeführt, wobei die erwähnten schräg verlaufenden Neigungsflächen 42 und Rampen 44 auf den Innenflächen der beiden Seitenwände 31, 26 den Stahlblechstreifen 24 durch das Lagergehäuse 23 hindurchleiten. Im endgültigen Montagezustand nehmen die Bauteile die aus Fig. 1 und 3 ersichtliche Lage im Verbinder 20 ein. Der Kupplungshaken 22 befindet sich dann zwischen den beiden Kupplungsnasen 21 außerhalb des Lagergehäuses 23. Die Kröpfung 52 schnappt dabei vor die Keilspitze 47, wobei sich die aus Fig. 6 ersichtliche Innenflanke 65 dieser Abkröpfung als Gegenschräge vor die Keilfläche 46 legt. Das freie Ende der Federzunge 53 stützt sich an der erwähnten Innenwand 43 des Lagergehäuses 23 ab. Die Endleiste 56 hintergreift den Exzenterbolzen 25 an seiner Exzenterscheibe 63 und hält dadurch den Exzenterbolzen 25 in den erwähnten Lagerstellen 29 und Lageröffnungen 32 fest. Die drei Bestandteile des Verbinders, nämlich Lagergehäuse 23, Stahlblechstreifen 24 und Exzenterbolzen 25, bilden eine zusammenhängende Baueinheit, ohne daß es zusätzlicher Befestigungsmittel bedarf. Die Exzenterscheibe 63 liegt dabei neben dem Stahlblechstreifen 24. Durch die Wirkung der Federzunge 53 wird die Exzenterscheibe 63 mit ihrer auch aus Fig. 10 ersichtlichen äußeren Stirnfläche 66 über das endseitige Endstück 61 des Stahlblechstreifens 24 gegen die Innenfläche der vorderen Seitenwand 26 im Lagergehäuse 23 angedrückt gehalten. Dadurch ragt der zur Betätigang des Exzenterbolzens 25 dienende Drehkopf 30 seitlich über die Begrenzungen des Lagergehäuses 23 hinaus.

Der aus nur drei Bestandteilen aufgebaute zusammenhängende Verbinder 20 kann als vorgefertigte Baueinheit verkauft werden. Diese Baueinheit wird durch die an der Stirnfläche 13 befindliche Öffnung in den Hohlraum 12 der Profilstange 10 eingesteckt. Der aus dem Lagergehäuse herausragende Drehkopf 30 des Exzenterbolzens 25 kann dabei, wie ein Druckknopf, im Sinne des aus Fig. 5 ersichtlichen Druckpfeils 67 eingedrückt werden. Dadurch verformt sich elastisch die Federzunge 53 und das Stirnende 34 des Lagerzapfens 33 und kann in den aus Fig. 3 ersichtlichen Leerraum 68 der Lageröffnung 32 hineingelangen. Bei diesem Eindrücken gemäß Pfeil 67 gelangt der ganze Drehkopf 30 unter die äußere Begrenzung des Lagergehäuses 23. Weil das Lagergehäuse dann keinen störend vorspringenden Drehkopf 30 mehr aufweist, kann die ganze Baueinheit "Verbinder" in das Profil im Sinne des Bewegungspfeils 69 eingeschoben werden, bis es zu der bereits im Zusammenhang mit Fig. 2 erwähnten Anschlagwirkung zwischen der Profilstirnfläche 13 und den hinteren Absätzen 49 der beiden Kupplungsnasen 21 kommt. Dann befindet sich nämlich der Exzenterbolzen 25 in axialer Ausrichtung mit einer entsprechend dimensionierten Querbohrung 70 in der einen Seitenfläche der Profilstange 10. Der axiale Druck gemäß Pfeil 67 auf den Lagerbolzen 25 läßt nach, so daß sein Drehkopf 30 durch Entspannung der elastisch verformten Federzunge 53 wieder herausgedrückt wird und dadurch in die Querbohrung 70 hineingelangt. Dieser Endzustand ist in den Endlagen von Fig. 1 und 3 gezeigt. Durch den Eingriff des Lagerkopfes 30 in der Querbohrung 70 der Profilstange 10 ist der Verbinder 20 im Inneren der Profilstange 10 gesichert und kann nicht wieder von selbst herausfallen. Dies ist nur durch bewußte Druckausübung im Sinne des Pfeils 67 und gleichzeitiges Herausziehen des Verbinders 20 im Sinne des in Fig. 5 angedeuteten Bewegungspfeils 71 möglich. Damit hat die Federkraft der Federzunge 53 zugleich die Aufgabe, den Verbinder 20 in seiner Endlage in der Profilstange 10 zu sichern.

In Fig. 1 und 3 befindet sich der Kupplungshaken 22 in einer Freigabestellung, welche die Profilstange 10 kuppelfähig macht, um sie in eine ausgewählte Längsnut 14 einer Säule 11 einführen zu können. Hier befindet sich, wie am besten aus Fig. 3 hervorgeht, der Kupplungshaken 22 in Ausrichtung mit der Projektion der beiden Nasen 21, weshalb diese Kupplungsmittel 21, 22 nur eine Profilbreite 15 aufweisen, die derjenigen eines einzelnen Kupplungsmittels 21, 22 entspricht. Dementsprechend hat die Eingangsweite 16 der Längsnut 14 auch nur diese enge Ausbildung, um im Kupplungsfall die zueinander fluchtend liegenden Kupplungsmittel 21, 22 an der anderen Profilstange 10 in die ausgewählte Nut 14 einführen zu können. Im Einsteckzustand schlägt die Stirnfläche 13 der Profilstange 10 an die Außenfläche 17 der Nutwand an. Der Exzenterbolzen 25 befindet sich, wie in Fig. 1 aus einer Markierung 19 zu erkennen ist, in einer Drehposition, in der der exzentrische Teil seiner Exzenterscheibe 63 zur Kupplungsnase 22 hinweist, wie aus Fig. 3 hervorgeht. Die starren Kupplungsnasen 21 sorgen, daß die Profilstange 10 schon im Einsteckzustand eine ausgerichtete Position zur Profilsäule 11 einnimmt.

Um die Profilstange 10 in der ausgewählten Position an der Profilseite 11 zu fixieren, braucht der Exzenterbolzen 25 lediglich verdreht zu werden, wozu ein Werkzeug in seine profilierte Aufnahme 72 auf der Stirnfläche seines Drehkopfes 30 eingeführt wird, welche in der Querbohrung 70 der Profilstange 10 sichtbar ist. Beim Drehen nimmt die Exzenterscheibe 63 die hintere Leiste 56 des Stahlblechstreifens 24 mit, bis schließlich die aus Fig. 2 und 4 ersichtliche Endläge erreicht ist, welche die gekuppelte Klemmstellung des Verbinders 20 zeigt. In dieser Klemmstellung hat sich der exzentrische Bereich des Exzenterbolzens 25, wie aus der Marke 19 zu erkennen ist, vor die endseitige Leiste 56 bewegt, während er vorher, in der Freigabestellung der Fig. 1, um 180° drehversetzt, an der lochseitigen Leiste 55 gemäß Fig. 3 lag. Wie aus dem Vergleich der Fig. 1 und 2 zu erkennen ist, hat sich in der Klemmstellung das vom Blechstreifen gebildete Halteglied 24 um eine Strecke 73 nach innen bewegt. Demgemäß ist auch der Kupplungshaken 22 einwärts geschoben. Weil aber an der Keilfläche 46 des Lagergehäuses 23 die erwähnte Gegenschräge 65 der Abkröpfung 52 dieses Halteglieds 24 unter dem Druck der Federzunge 53 anliegt, wird bei dieser Einwärtsverschiebung die Gegenschräge 65 an der Keilfläche 46 gleichzeitig seitlich verschoben, so daß der Kupplungshaken 22 die durch den Pfeil 74 in Fig. 4 angedeutete Schwenkbewegung ausführt. Dadurch kommt die Endkante 58 über den Nuteingang 16 hinweg vor die Nutinnenwand 18 und wird dort in der letzten Phase der Spannbewegung des Exzenters 63 fest angedrückt, wobei es wegen der geschweiften Ausbildung dieser Endkante 58 gemäß Fig. 7 zu einer Zwei-Punkt-Berührung kommt. In dieser Klemmstellung werden die starren Kupplungsnasen 21 an der der Haken-Endkante 58 gegenüberliegenden Laibungsseite 75 des Nuteingangs festgepreßt, wie aus Fig. 4 hervorgeht. Jetzt sind die beiden Profilstangen 10, 11 fest miteinander gekuppelt. Die starren Kupplungsnasen 21 lassen eine Torsionsbewegung der Profilstange 10 nicht zu.

In einer solchen Klemmstellung gemäß Fig. 2 und 4 läßt sich der Drehkopf 30 nicht gegen die Federzunge 53 axial eindrücken, um die oben geschilderte Demontage des Verbinders 20 aus dem Inneren der Profilstange 10 einzuleiten. Damit ist zugleich sichergestellt, daß die gekuppelten Profilstangen 10, 11 nicht durch irrtümlichen Axialdruck auf den Drehkopf 30 durch Ablösung des Verbinders 20 außer Eingriff kommen können. Wie am besten aus Fig. 8 zu erkennen ist, trägt die hintere Seitenwand 31 des Lagergehäuses 23 innenseitig Anschläge 76 durch angeformte Blöcke, die sich in der Klemmstellung unter das hintere Ende des Endstücks 61 am Halteglied 24 schieben. Das Halteglied ist dann blockiert und läßt sich nicht gegen die Kraft der Federzunge 53 axial nach innen drücken, wie aus Fig. 4 hervorgeht. Liegt dagegen die aus Fig. 3 und 5 ersichtliche Freigabestellung vor, so ist das Halteglied 24 soweit axial auswärts geschoben daß sein hinteres Ende jenseits dieses Anschlags 76 zu liegen kommt und daher der axialdruck 67 gemäß Fig. 5 ausführbar ist.

Der Exzenterbolzen 25 besteht aus einsatzgehärtetem Stahl. Beim Drehen des Exzenterbolzens 25 in seine Klemmstellung von Fig. 2 und 4 hat die im Zusammenhang mit Fig. 6 erläuterte Ausbiegung 60 die Möglichkeit, eine Längsfederung in das Halteglied 24 zu bringen; beim Spannen des Exzenters kann diese Ausbiegung 60 sich strecken. Dadurch kann die Endkante 58 des Kupplungshakens 22 mit einer definierten Festhaltekraft an der Nutinnenwand 18 festgepreßt sein.

Um die beiden Profilstangen 10, 11 wieder voneinander zu lösen, braucht der Exzenterbolzen 25 nur in die Freigabestellung der Fig. 1 und 3 zurückgedreht zu werden. Dann drückt die Exzenterscheibe 63 gegen die vordere Leiste 55 und es kommt zu einem Auswärtsschub des Halteglieds 24 um die bereits erwähnte Strecke 73. Die Gegenschräge 65 gleitet dabei unter der Kraft der Federzunge 53 an der Keilfläche 46 abwärts und es kommt zu einem Rückschwenken des Kupplungshakens 22, entgegen dem Schwenkpfeil 74 von Fig. 4, wodurch der Kupplungshaken 22 wieder in Ausrichtung mit den beiden Kupplungsnasen 21 gelangt. Die Endkante 28 des Kupplungshakens 22 hat die Nutinnenwand 18 wieder freigegeben. Die Kupplungsmittel 21, 22 können aus der Längsnut 14 herausgezogen werden, wodurch die Profilstangen 10, 11 voneinander gelöst sind.

## Patentansprüche

1. Gestell aus lösbar verbindbaren Profilstangen (10, 11), von denen wenigstens einige hinterschnittene Längsnuten (14) und andere einen Hohlraum (12) zur stirnseitigen Aufnahme eines Verbinders (20) aufweisen,

der Verbinder (20) aus einem im Hohlraum (12) steckenden Lagergehäuse (23) und aus einem im Lagergehäuse (23) längsverschieblichen Halteglied (24) besteht,

das Halteglied weist endseitig einen aus der Profilstange (10) herausragenden und im Kupplungsfall in eine Längsnut (14) einsteckbaren sowie dort festklemmbaren Kupplungshaken (22) auf,

das Lagergehäuse (23) ist mit einer Keilfläche (46) und das Halteglied (24) mit einer daran anliegenden Gegenschräge (65) versehen,

das Halteglied (24) ist von einem im Lagergehäuse (23) axial drehgelagerten Exzenterbolzen (25) durchsetzt,

der einen als Handhabe dienenden Drehkopf (30) und eine Exzenterscheibe (63) aufweist und axial, quer zur Profilstange (10), federbelastet ist,

der federbelastete Exzenterbolzen (25) den Drehkopf (30) aus dem Lagergehäuse (23) in eine Montagestellung herausgedrückt hält, wo er (30) nachgiebig in eine Querbohrung (70) der den Verbinder (20) aufnehmenden Profilstange (10) hineinragt

und der Drehkopf (30) gegen die federbelastung ins Lagergehäuse (23) bis zu einer Demontagestellung eindrückbar ist, wo er (30) die Querbohrung (70) der Profilstange (10) freigibt,

beim Drehen des Exzenterbolzens (25) überführt die Exzenterscheibe (63) das Halteglied (24) zwischen einer Ausschub- und einer Einschublage und bewegt (Pfeil 74) dabei durch Auflauf der Gegenschräge (65) auf die Keilfläche (46) den Kupplungshaken (22) quer zur Profilstange (10),

und mit einer in Einschublage des Halteglieds (24) die axiale Beweglichkeit (67) des Exzenterbolzens (25) verhindernden Sicherung,

dadurch gekennzeichnet,

daß die Sicherung aus einem ortsfesten Anschlag (76) im Inneren des Lagergehäuses (23) besteht, der bezüglich eines zur Anlage des Exzenterbolzens (25) im Eindrücksinne (Pfeil 67) dienenden Endstücks (61) des Halteglieds (24) derart angeordnet ist,

daß der Anschlag (76) in Ausschublage des Halteglieds (24) sich zwar außerhalb des Endstücks (61) befindet und daher dessen Quer-Verschwenkbarkeit (Pfeil 67) zuläßt, aber in Einschublage des Halteglieds (24) unter dem Endstück (61) liegt und daher dessen Quer-Verschwenkbarkeit (Pfeil 67) blockiert.

## Claims

1. A framework of releasably connectable profile bars (10, 11), of which at least some have undercut longitudinal slots (14) while others have a hollow space (12) for front face reception of a coupling member (20),

the coupling member (20) comprises a bearing housing (23) fitted into the hollow space (12) and a retaining element (24) movable longitudinally in the bearing housing (23),

the retaining element has at its end a coupling hook (22) protruding from the profile bar (10) and when coupled, engageable in a longitudinal slot (14) and adapted to be clamped therein,

the bearing housing (23) is provided with a wedge surface (46) and the retaining element (24) with a matching inclined surface (65) resting thereon,

the retaining element (24) is traversed by an eccentric pin (25) supported for axial movement in the bearing housing (23),

which has a control knob (30) serving as a handle, and an eccentric disk (63) and is spring-loaded axially, transversely to the profile bar (10),

the spring-loaded eccentric pin (25) keeps the control knob (30) pressed out of the bearing housing (23) into an assembly position in which it (30) resiliently projects into a crosshole (70) of the profile bar (10) accommodating the coupling member (20),

and the control knob (30) can be pressed into the bearing housing (23) against the spring-action as far as a dismantling position in which it (30) releases the crosshole (70) of the profile bar (10),

the eccentric disk (63), upon rotation of the eccentric pin (25), passes the retaining element (24) between a release position and a clamped position, thereby moving (arrow 74) the coupling hook (22) transversely to the profile bar (10), when the matching inclined surface (65) passes up the wedge surface (46),

and further comprising safety means preventing the axial movability (67) of the eccentric pin (25) in the clamped position of the retaining element (24),

characterized in

that the safety means consist of a stationary stop (76) inside the bearing housing (23) mounted relative to an end piece (61) of the retaining element (24) serving for abutment of the eccentric pin (25) in a pressed-in sense (arrow 67) in such a manner that though in the release position of the retaining element (24) the stop (76) is located beyond the end piece (61), and therefore permits its transverse swing (arrow 67), however, in the clamped position of the retaining element (24) comes to lie underneath the end piece (61) thereby preventing its transverse swing (arrow 67).

**Revendication**

1. Echafaudage formé de barres profilées pouvant être assemblées de manière amovible (10, 11), dont au moins certaines comportent des gorges longitudinales à parties rentrantes (14) et d'autres comportent une cavité (12) permettant de recevoir du côté frontal un connecteur (20), le connecteur (20) est constitué d'un boîtier-palier (23) s'emboîtant dans la cavité (12) et d'un organe de maintien (24) déplaçable longitudinalement dans ce boîtier-palier (23), cet organe de maintien comporte, du côté d'une extrémité, un crochet d'accouplement (22) faisant saillie hors de la barre profilée (10) et pouvant être emboîté, en cas d'accouplement, dans une gorge longitudinale (14) et y être verrouillé, le boîtier-palier (23) est muni d'une surface en coin (46) et l'organe de maintien (24) est muni d'une contre-inclinaison s'y appuyant (65), l'organe de maintien (24) est traversé par un axe à excentrique (25) qui est monté rotatif, autour de son axe, dans le boîtier-palier (23), cet axe à excentrique (25) comporte une tête de rotation (30) servant de manoeuvre et un disque excentrique (63), et il est soumis à un effort élastique suivant le sens de son axe, transversalement à la barre profilée (10),

l'axe à excentrique chargé par ressort (25) maintient, dans une position de montage, la tête de rotation (30) repoussée hors du boîtier-palier (23), cette tête (30) pénétrant de manière élastique dans un perçage transversal (70) de la barre profilée (10) où est logé le connecteur (20), et la tête de rotation (30) peut être enfoncée dans le boîtier-palier (23) jusque dans une position de démontage, à l'encontre de l'effort élastique, cette tête (30) libérant le perçage transversal (70) de la barre profilée (10),

le disque excentrique (63) faisant passer, lors d'une rotation de l'axe à excentrique (25), l'organe de maintien (24) entre une position déployée et une position rétractée, et déplaçant par suite (flèche 74) le crochet d'accouplement (22) transversalement à la barre profilée (10), du fait de la montée de la contre-inclinaison (65) sur la surface en coin (46), le connecteur (20) comportant une sécurité empêchant, dans la position rétractée de l'organe de maintien (24), un déplacement axial (67) de l'axe à excentrique (25),

caractérisé en ce que la sécurité est constituée par une butée fixe (76) qui est située sur l'intérieur du boîtier-palier (23) et qui est disposée, par rapport à un tronçon extrême (61) de l'organe de maintien (24) qui sert à l'appui de l'axe à excentrique (25) dans le sens de l'enfoncement (flèche 67), d'une manière telle que, bien que cette butée (76) se trouve à l'extérieur du tronçon extrême (61) pour la position déployée de l'organe de maintien (24) et autorise donc la possibilité de basculement transversal (flèche 67) de ce tronçon extrême, par contre, dans la position rétractée de l'organe de maintien (24), cette butée (76) se trouve au-dessous du tronçon extrême (61) et bloque donc la possibilité de basculement transversal (flèche 67) de celui-ci.

FIG.1

FIG.2

FIG.3

FIG.4

FIG.5

FIG.6

FIG.7

FIG.8

FIG.9

FIG.10

FIG.11